# EUROPÄISCHE PATENTSCHRIFT

(11) **EP 2 813 134 B1**
(45) Veröffentlichungstag und Bekanntmachung des Hinweises auf die Patenterteilung: **03.10.2018**
(21) Anmeldenummer: 14171465.9
(22) Anmeldetag: 06.06.2014
(51) Int. Cl.: A01D 17/10, B65G 15/52

(54) **Stabband für Stabbandförderer landwirtschaftlicher Maschinen**
Rod belt for rod belt conveyors of agricultural machines
Bande transporteuse à barreaux pour convoyeur à bande à barreaux de machines agricoles

(30) Priorität: 12.06.2013 US 201313916224
(43) Veröffentlichungstag der Anmeldung: 17.12.2014
(73) Patentinhaber: Arnold Jäger Holding GmbH, 30625 Hannover (DE)
(72) Erfinder: Mulder, Jan-Harm, 7751 DN Dalen (NL)
(74) Vertreter: Bremer, Ulrich

(56) Entgegenhaltungen:
- EP-A1- 0 080 238
- DE-A1- 2 715 108
- DE-A1- 10 308 823
- DE-C- 861 071
- US-A1- 2008 202 405

## Beschreibung

Die vorliegende Erfindung betrifft ein Stabband für Stabbandförderer landwirtschaftlicher Maschinen gemäß dem Oberbegriff des Anspruchs 1.

Bei einem aus der DE 195 20 925 A1 bekanntem Stabband ist nachteilig, dass eine Vielzahl von Verbindungsstellen zwischen den Stäben und den Gurten vorgesehen werden muss. Das trifft insbesondere bei kleiner Stabteilung zu.

Dieser Nachteil ist auch bei Stabbändern vorhanden, deren Gurte an der Unterseite mit Nocken zum Zwangsantrieb versehen sind. Die Gurte laufen mit Ihren Nocken über Umlenk- und Treibräder, die mit Mitteln versehen sind, die in die Abstände zwischen den Nocken eingreifen, also die gleiche Teilung wie die Nocken aufweisen, und die Stabbänder zwangsantreiben bzw -führen. Ein derartiges Stabband ist z. B. aus der DE 10 2007 049 839 B3 bekannt. Bei derartigen Stabbändern entspricht die Teilung der Stäbe der Teilung der Nocken, da sich die Befestigungsstellen der Stäbe in den Lücken zwischen den Nocken befinden. Das ist dann von Nachteil, wenn ein Stabband mit bestimmter Stabteilung gegen ein anderes Band mit anderer Stabteilung ausgewechselt werden muss. Es ist dann erforderlich, nicht nur die Bänder auszutauschen, sondern auch die entsprechenden Umlenk- und Treibräder.

Um diesen Nachteil zu beseitigen, ist in der DE 34 41 605 A1 vorgeschlagen worden, die Nocken nicht über die gesamte Breite der Gurte zu führen, sondern Randzonen vorzusehen, die frei von Nocken sind. Dadurch ist es möglich, das Festlegen der Stäbe auf den Gurten unabhängig von der Teilung der Nocken vorzunehmen. Aufgrund dieser Lösung können Stabbänder hergestellt werden, bei denen die Stabteilung von der Teilung der Nocken abweicht, insbesondere kleiner sein kann.

Ein gattungsgemäßes Stabband für Stabbandförderer ist in der DE 27 15 108 A1 beschrieben Dieser Stabbandförderer weist mindestens zwei endlos umlaufende Gurte auf, die durch quer verlaufende, parallel zueinander angeordnete Stäbe miteinander verbunden sind. Dazu weisen die Stäbe abgeflachte und gelochte Endbereiche auf, die auf den Gurten aufliegen und durch zwei Niete mit diesen verbunden sind. Zwischen je zwei benachbarten Querstäben sind Haltestücke angebracht, in die jeweils ein Zusatzstab einsetzbar ist. Dieser Zusatzstab unterteilt den lichten Abstand zwischen zwei benachbarten Querstäben. Die Haltestücke weisen einen Befestigungsschenkel auf, der jeweils den gelochten Endbereich eines Querstabes übergreift und zusammen mit diesem mittels eines der beiden Niete am Gurt befestigt sind. An dem ihrer Befestigungsstelle abgewandten Ende sind die Haltestücke mit als Sackbohrungen ausgeführten Aufnahmebohrungen für die Enden der Zusatzstäbe ausgestattet. Die Zusatzstäbe sind als elastische biegsame Federstäbe ausgeführt. Zu ihrem Festlegen in den Haltestücken werden die Zusatzstäbe zunächst mit einem ihrer Enden in die Aufnahmebohrung eines Haltestücks eingesteckt und dann etwas gebogen, so dass ihr anderes Ende in die gegenüberliegende Aufnahmebohrung eingeführt werden kann. Danach entspannen sich die Zusatzstäbe wieder, wodurch sie sich gerade ausrichten und in den beiden Aufnahmebohrungen eines Paares von Haltestücken gehalten sind.

Wenn aus Festigkeitsgründen die Zusatzstäbe starr ausgeführt werden müssen, ist vorgesehen, dass zu mindestens einer der Haltestücke eine Durchgangsbohrung aufweist, in die ein Ende eines Zusatzstabes seitlich eingeschoben werden kann. Um ein seitliches Herausrutschen des Zusatzstabes aus der Durchgangsbohrung zu verhindern, wird diese durch eine Verschlussschraube oder einen Querstift gesichert.

Ein Vorteil dieses bekannten Stabbandes ist darin zu sehen, dass bei gleichbleibender Teilung der Befestigungsstellen der Querstäbe auf den Gurten die Stabteilung durch Einsetzen oder Herausnehmen der Zusatzstäbe verändert werden kann. Als nachteilig ist anzusehen, dass sich die Haltestücke auf den Gurten über die Befestigungsstellen der Querstäbe hinaus in Gurtlängsrichtung erstrecken, wodurch die Flexibilität der Gurte eingeschränkt wird, was sich besonders nachteilig auf den Lauf des Stabbandes an den Umlenkstellen auswirkt. Des Weiteren kann sich zwischen den Gurten und den über ihnen angebrachten Haltestücken Pflanzenmaterial und ähnliches verklemmen, was sich ebenfalls negativ auf die Laufruhe des Stabbandes auswirkt.

Aufgabe der vorliegenden Erfindung ist es, ein gattungsgemäßes Stabband für Stabbandförderer zur Verfügung zu stellen, welches mit einer Stabteilung hergestellt werden kann, die von der Teilung der Befestigungsstellen auf den Gurten abweicht, insbesondere kleiner als diese ist, ohne die Flexibilität der Gurte zu beeinträchtigen.

Diese Aufgabe wird erfindungsgemäß mit einem Stabband für Stabbandförderer gelöst, welches die Merkmale des Anspruchs 1 aufweist.

Aufgrund der erfindungsgemäßen Lösung kann z. B. bei gleichbleibender Teilung der Befestigungsstellen der Stäbe auf den Gurten die Stabteilung verringert werden. Dabei sind die nicht mit den Gurten verbundenen Stäbe mit Ihren Enden dicht an die Gurtinnenseiten herangeführt, um die Nutzbreite der Stäbe möglichst optimal auszunutzen. Um eine günstige Belastung der Gurte zu erreichen, ist es sinnvoll, wenn die Längsachsen der Stäbe etwa in der neutralen Faser der Gurte liegen. Dazu ist es erfindungsgemäß erforderlich, lediglich die mit den Gurten verbundenen Stäbe entsprechend nach unten abzukröpfen. Die nicht mit den Gurten verbundene Stäbe können dann über ihre gesamte Länge gerade ausgeführt werden, da sie durch Verbinden mit dem abgekröpften Bereich des mit den Gurten verbundenen Stabes automatisch in der neutralen Faser der Gurte liegen.

Weitere vorteilhafte Ausgestaltungen der Erfindung ergeben sich aus den abhängigen Ansprüchen.

Die Erfindung wird nachstehend anhand von Ausführungsbeispielen näher erläutert. In der dazugehörigen Zeichnung zeigt:
- Fig. 1: eine Draufsicht auf ein Stabband gemäß einer ersten Ausführungsform der Erfindung,
- Fig. 2: einen Schnitt A-A gemäß Figur 1 in vergrößerter Darstellung, und
- Fig. 3: eine Draufsicht auf ein Stabband gemäß einer zweiten Ausführungsform der Erfindung.

Das in der Zeichnung dargestellte Stabband 1 besteht aus zwei parallel zueinander angeordneten, umlaufenden Gurten 2. In der Zeichnung ist nur eine Seite des Stabbandes 1 dargestellt. Die andere Seite ist spiegelbildlich aufgebaut, so dass die nachfolgenden Ausführungen auch für diese Seite gelten.

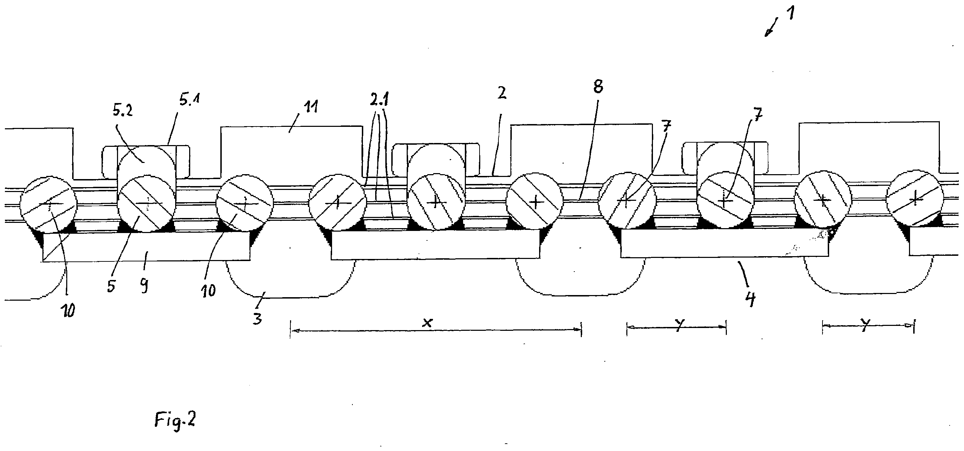

Die Gurte 2 sind in diesem Ausführungsbeispiel als Nockenriemen ausgeführt und können z. B. aus Gummi bestehen, der durch Gewebeeinlagen 2.1 (siehe Figur 2) verstärkt ist.

Auf der Unterseite der Gurte 2 sind Nocken 3 vorgesehen, die in einer Teilung x voneinander beabstandet sind. Diese Nocken 3 dienen dem Zwangsantrieb des Stabbandes 1. Dazu greifen nicht dargestellte Antriebsmittel von Antriebsrädern in Lücken 4 ein, die sich zwischen den Nocken 3 befinden . Derartige Ausführungen sind aus dem Stand der Technik bekannt und müssen daher nicht näher erläutert werden.

Der Abstand zwischen den Gurten 2 ist durch Stäbe 5 hergestellt, die quer zur Förderrichtung des Stabbandes 1 und parallel zueinander angeordnet und an ihren Enden mit den Gurten 2 verbunden sind. Dazu sind die Stäbe 5 mit abgeflachten Endbereichen 5.1 versehen, die durch Schmieden aus Rundstäben hergestellt sind und auf den Gurten 2 aufliegen. Die Endbereiche 5.1 weisen zwei voneinander beanstandete Löcher für Befestigungsmittel, wie z. B. Niete 6 auf, die die flachen Endbereiche 5.1 sowie die Gurte 2 durchsetzen.

Die Stäbe 5 liegen im Bereich oberhalb der Lücken 4 zwischen den Nocken 3 auf den Gurten 2 auf, besitzen also dieselbe Teilung x wie die Nocken 3. Die Endbereiche 5.1 der Stäbe 5 gehen an ihrem inneren Ende in einen nach unten abgekröpften Bereich 5.2 über, so dass die Längsachsen 7 der Stäbe 5 im Wesentlichen in der neutralen Faser 8 der Gurte 2 liegen (Figur 2).

An die Unterseite der Stäbe 5 sind Quertraversen 9 in Form von Stahlblechstreifen angeschweißt, an deren Oberseite jeweils zwei weitere Stäbe 10 angeschweißt sind, die parallel zu den Stäben 5 angeordnet sind, und deren Längsachsen 7 in einer Teilung y von den Längsachsen 7 der Stäbe 5 angeordnet sind. Die Stäbe 10 haben den gleichen Durchmesser wie die Stäbe 5, so dass deren Längsachsen 7 ebenfalls in der neutralen Faser 8 der Gurte 2 angeordnet sind. Die benachbarten Stäbe 10 zweier benachbarter Traversen 9 sind ebenfalls mit einer Teilung y voneinander beabstandet. Somit sind alle Stäbe 5 und 10 mit der gleichen Teilung y zueinander angeordnet, die um ein vielfaches kleiner ist als die Teilung x der Nocken 3.

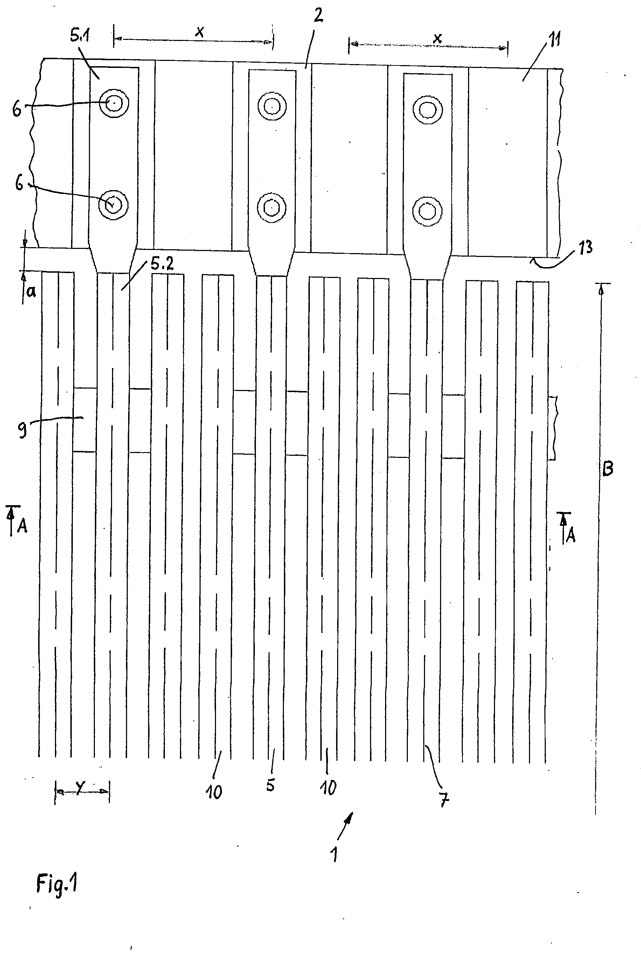

Die Stäbe 10 haben keinen Kontakt mit den Gurten 2, sind aber mit ihren Enden dicht an die Innenseite 13 der Gurte 2 herangeführt, um eine möglichst große Nutzbreite B (Fig. 1) zu haben. Die Stäbe 10 benötigen im Gegensatz zu den Stäben 5 keine Schmiedearbeit, sondern können von einem Coil gerade abgelängt, also einfach hergestellt werden.

Da die Befestigungsbereiche 5.1 der Stäbe 5 in Laufrichtung der Gurte 2 gesehen nur eine schmale Erstreckung haben, können auf der Oberseite der Gurte 2 diametral gegenüberliegend den Nocken 3 weitere Nocken 11 vorgesehen werden. Diese Nocken 11 dienen dem Schutz der auf den Gurten 2 befestigten Endbereiche 5.1 der Stäbe 5.

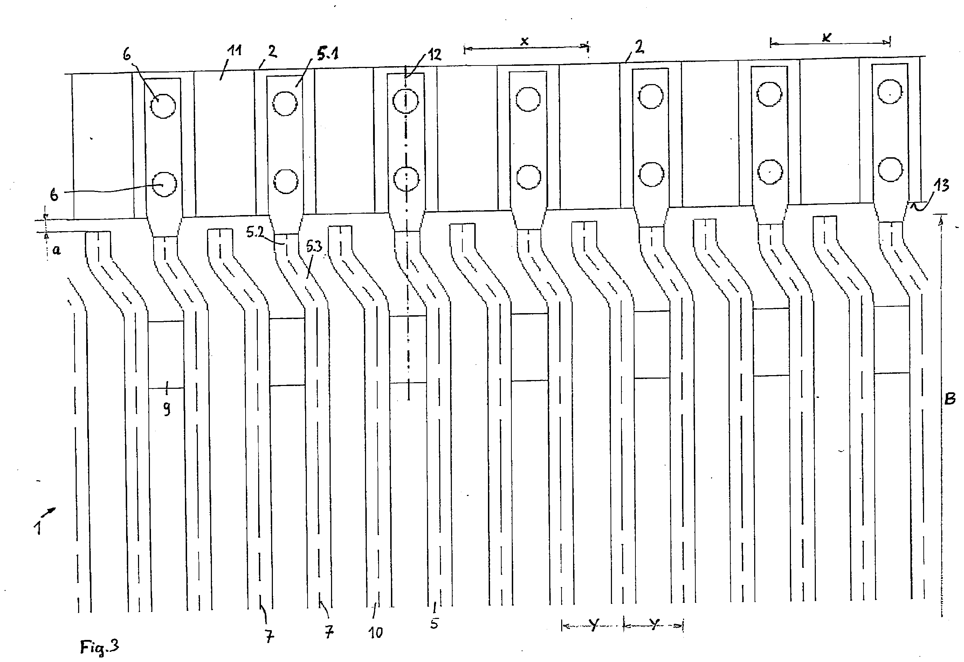

Figur 3 zeigt ein weiteres Ausführungsbeispiel der vorliegenden Erfindung. Gleiche oder gleich wirkende Bauteile sind mit den gleichen Bezugszeichen versehen wie im vorhergehenden Ausführungsbeispiel.

Das Ausführungsbeispiel gemäß Figur 3 unterscheidet sich von dem vorstehenden Ausführungsbeispiel lediglich dadurch, dass nur noch ein zusätzlicher Stab 10 an jede Traverse 9 angeschweißt ist. Die Stäbe 5 sind neben einer Abkröpfung 5.2 nach unten in die neutrale Faser 8 der Gurte 2 mit einer weiteren Abkröpfung 5.3 in die bzw. entgegen der Laufrichtung des Gurtbandes 1 ausgestattet. Diese weitere Abkröpfung 5.3 ist vorgesehen, um einen möglichst mittigen Verlauf der Befestigungsachse 12 der Endbereiche 5.1 zwischen den Stäben 5 und 10 zu erreichen. Damit sollen aus den Stäben 5 und 10 auf die Befestigungsachse 12 wirkende Momente möglichst ausgeglichen werden. Die Enden der Stäbe 10 sind wiederum dicht an die Innenseite 13der Gurte 2 herangeführt (Abstand a), wobei die Endbereiche der Stäbe 10 ebenfalls mit Abkröpfungen 5.2 und 5.3 versehen sind, um einen möglichst parallelen Verlauf zu den Endbereichen der Stäbe 5 zu haben. Schmiedearbeiten müssen auch bei diesem Ausführungsbeispiel an den Stäben 10 nicht vorgenommen werden.

## Patentansprüche

1. Stabband für Stabbandförderer landwirtschaftlicher Maschinen mit quer zur Laufrichtung und parallel zueinander angeordneten Stäben, wobei mindestens einer der Stäbe abgeflachte und gelochte Endbereiche aufweist, mit denen er auf parallel zueinander umlaufenden zugfesten, elastischen und endlosen Gurten aufliegt und durch Niete oder ähnliche Befestigungsmittel, die die Endbereiche und die Gurte durchsetzen, verbunden ist, wobei mit dem mindestens einen mit den Gurten (2) verbundenen Stab (5) mindestens ein weiterer Stab (10) starr verbunden ist, **dadurch gekennzeichnet, dass** an dem mindestens einen mit den Gurten (2) verbundenen Stab (5) beidseitig eine Quertraverse (9) angeschweißt ist, mit der der mindestens eine weitere Stab (10) starr verbunden ist, wobei der mindestens eine weitere Stab (10) mit seinen Enden dicht an die einander zugekehrten Gurtinnenseiten (13) herangeführt ist ohne diese zu berühren.

2. Stabband nach Anspruch 1, **dadurch gekennzeichnet, dass** die starre Verbindung eine Schweißverbindung ist.

3. Stabband nach Anspruch 1 oder 2, **dadurch gekennzeichnet, dass** der mindestens eine mit den Gurten (2) verbundene Stab (5) zur neutralen Faser (8) der Gurte (2) hin abgekröpft ist, so dass die Längsachsen (7) der Stäbe (5, 10) in der neutralen Faser (8) der Gurte (2) liegen.

## Claims

1. Rod belt for rod belt conveyors of agricultural machines having rods arranged transversely to the running direction and in parallel to one another, wherein at least one of the rods has flattened and perforated end regions, with which it is supported on elastic and continuous belts with high tensile strength, circulating in parallel to one another, and is connected by rivets or similar fastening means which penetrate the end regions and the belts, wherein at least one further rod (10) is connected rigidly to the at least one rod (5) connected to the belts (2), **characterised in that** a crossbar (9) is welded on the at least one rod (5) connected to the belts (2) on both sides, to which crossbar the at least one further rod (10) is connected rigidly, wherein the at least one further rod (10) is introduced with its ends in a compact manner onto the belt inner sides (13) which are turned toward each other, without touching these.

2. Rod belt according to claim 1, **characterised in that** the rigid connection is a weld connection.

3. Rod belt according to claim 1 or 2, **characterised in that** the at least one rod (5) connected to the belts (2) is bent towards the neutral fibre (8) of the belts (2) such that the longitudinal axes (7) of the rods (5, 10) lie in the neutral fibre (8) of the belts (2).

## Revendications

1. Bande à barreaux pour convoyeur à bande à barreaux de machines agricoles, comprenant des barreaux disposés transversalement à la direction d'avance et parallèlement les uns aux autres, au moins l'un des barreaux présentant des zones d'extrémité aplaties et perforées avec lesquelles il repose sur des courroies élastiques et sans fin rigides en traction, circulant parallèlement les unes aux autres, et avec lesquelles il est connecté par des rivets ou des moyens de fixation similaires qui traversent les zones d'extrémité et les courroies, au moins un barreau supplémentaire (10) étant connecté rigidement à l'au moins un barreau (5) connecté aux courroies (2), **caractérisée en ce qu'**au niveau de l'au moins un barreau (5) connecté aux courroies (2) est soudée des deux côtés une traverse (9) avec laquelle l'au moins un barreau supplémentaire (10) est connecté rigidement, l'au moins un barreau supplémentaire (10) étant approché étroitement avec ses extrémités contre les côtés intérieurs (13) des courroies tournés l'un vers l'autre sans venir en contact avec ceux-ci.

2. Bande à barreaux selon la revendication 1, **caractérisée en ce que** la connexion rigide est une connexion soudée.

3. Bande à barreaux selon la revendication 1 ou 2, **caractérisée en ce que** l'au moins un barreau (5) connecté aux courroies (2) est coudé vers les fibres neutres (8) des courroies (2) de telle sorte que les axes longitudinaux (7) des barreaux (5, 10) soient situés dans les fibres neutres (8) des courroies (2).
